# EUROPÄISCHE PATENTSCHRIFT

(11) **EP 3 609 309 B1**
(45) Veröffentlichungstag und Bekanntmachung des Hinweises auf die Patenterteilung: **29.12.2021**
(21) Anmeldenummer: 18722931.5
(22) Anmeldetag: 24.04.2018
(51) Int. Cl.: A01B 63/24, A01B 63/111, A01B 63/32, A01B 63/112, A01B 15/16, A01B 21/08

(54) **LANDWIRTSCHAFTLICHES BODENBEARBEITUNGSGERÄT**
AGRICULTURAL SOIL TILLING IMPLEMENT
ENGIN DE TRAVAIL DE SOL DANS LE DOMAINE DE L'AGRICULTURE

(30) Priorität: 24.04.2017 DE 102017003951; 13.09.2017 DE 102017121152
(43) Veröffentlichungstag der Anmeldung: 19.02.2020
(73) Patentinhaber: PÖTTINGER Landtechnik GmbH, 4710 Grieskirchen (AT)
(72) Erfinder: PREIMEß, Hans-Jörg, 4710 Grieskirchen (AT); BALDINGER, Friedrich, 4600 Wels (AT); KALTSEIS, Martin, 4733 Heiligenberg (AT); MEINDLHUMER, Wilhelm, 4713 Gallspach (AT)
(74) Vertreter: Thoma, Michael
(86) Internationale Anmeldenummer: PCT/EP2018/060491
(87) Internationale Veröffentlichungsnummer: WO 2018/197505

(56) Entgegenhaltungen:
- EP-A1- 2 911 495
- CN-A- 105 009 719
- DE-A1- 10 236 827
- DE-A1-102016 217 593
- US-A1- 2014 048 295
- US-B2- 8 235 130

## Beschreibung

Die vorliegende Erfindung betrifft ein landwirtschaftliches Bodenbearbeitungsgerät mit zumindest zwei Reihen von Bodenwerkzeugen, die an einem Werkzeugtragrahmen befestigt sind, der um eine liegende Rahmenschwenkachse schwenkbar an einem durch ein Fahrwerk am Boden abgestützten Maschinenrahmen gelagert und durch eine Hubvorrichtung in eine Vorgewende- und/oder Transportstellung aushebbar ist.

Ein solches landwirtschaftliches Bodenbearbeitungsgerät kann insbesondere als Anbaugerät ausgebildet sein, das an einen Schlepper anbaubar ist und von diesem gezogen wird. Um einerseits große Arbeitsbreiten realisieren zu können, andererseits aber die zulässigen Abmessungen für den Straßentransport einhalten oder das Gerät auch nur für den Nichtarbeitsbetrieb kompakter konfigurieren zu können, können die Bodenbearbeitungswerkzeuge an einem schwenkbaren Werkzeugträgerrahmen angebracht sein, der gegenüber dem durch ein Fahrwerk am Boden abgestützten Maschinenrahmen verschwenkbar ist. Beispielsweise kann der genannte Werkzeugtragrahmen um eine liegende, sich quer zur Fahrtrichtung erstreckende Rahmenschwenkachse aus einer liegenden, abgesenkten Arbeitsstellung in eine näherungsweise aufrechte Transportstellung ausgehoben werden, was durch eine fremdenergiebetätigte Hubvorrichtung beispielsweise in Form eines Druckmittelzylinders bewerkstelligt werden kann. Vorteilhafterweise kann der genannte Werkzeugtragrahmen dabei in mehrere Segmente unterteilt sein, die zueinander verklappbar sind, sodass an sich überstehende Rahmensegmente in der Transportstellung weiter nach innen klappbar sind.

Im Arbeitsbetrieb kann es bei solchen Bodenbearbeitungsgeräten zu einem Schrägzug kommen, bei dem das Fahrwerk quer zur eigentlichen Fahrtrichtung über den Boden radiert und die Bodenbearbeitungswerkzeuge nicht mehr exakt in ihrer an sich bestimmungsgemäßen Ausrichtung arbeiten. Ein solches Aus-der-Spur-Laufen resultiert dabei vorwiegend aus ungleichen Querkräften an den Werkzeugreihen, die sich nicht mehr gegenseitig kompensieren. Bodenbearbeitungswerkzeuge wie beispielsweise Scharscheiben können bestimmungsgemäß gegenüber der Fahrtrichtung spitzwinklig schräg angestellt sein, sodass sich bei bestimmungsgemäßer Arbeitsweise an den Bodenwerkzeugen Querkräfte quer zur Fahrtrichtung ergeben. Solche Querkräfte sollten sich gegenseitig aufheben, wenn die Bodenwerkzeuge zueinander gegenläufig geneigt angestellt sind. Eine solche gegenläufige Anstellung der Bodenwerkzeuge ist an sich nicht vorrangig wegen der genannten Kompensation der Querkräfte, sondern zur Erzielung einer besseren, intensiveren Bodenbearbeitung vorgesehen. Sind beispielsweise die Scharscheiben einer vorauslaufenden Bodenwerkzeugreihe leicht zur Fahrtrichtung nach links angestellt und die Scharscheiben einer hinterherlaufenden zweiten Bodenwerkzeugreihe leicht zur Fahrtrichtung nach rechts angestellt, kann eine verbesserte Bodenauflockerung und Durchmischung des Erdreichs sowie eine bessere Durchtrennung von Wurzelwerk erzielt werden. Gleichzeitig kompensieren sich die durch die Schrägstellung resultierenden Querkräfte in gewissem Maße gegeneinander.

Allerdings wird das Gleichgewicht der Querkräfte durch ungleiche Eingriffsbedingungen an den Bodenwerkzeugreihen gestört. Während die vorauslaufende Bodenwerkzeugreihe in den noch ungelockerten, harten Boden schneidet und dementsprechend hohe Querkräfte verursacht, schneidet die hinterherlaufende Bodenwerkzeugreihe in bereits zumindest teilweise aufgelockertes Erdreich, sodass geringere Querkräfte resultieren.

Es wurde daher bereits angedacht, das genannte Ungleichgewicht der Querkräfte dadurch zu beseitigen, dass die Bodenwerkzeugreihen in unterschiedlichen Arbeitstiefen gefahren werden. Wenn die hinterherlaufende Bodenwerkzeugreihe in einer etwas größeren Arbeitstiefe fährt, können trotz des teilweise bereits gelockerten Bodens größere Querkräfte bzw. genauso große Querkräfte wie an der vorauslaufenden Bodenwerkzeugreihe erzielt werden, die in geringerer Arbeitstiefe in ungelockerten Boden schneidet, sodass ein Schrägzug mit radierendem Fahrwerk vermieden werden kann. Allerdings ist es schwierig, die exakt passende Arbeitstiefeneinstellung zu finden, die einen Schrägzug des Bodenbearbeitungsgeräts möglichst vermeidet, da die an dem Bodenwerkzeug resultierenden Querkräfte von verschiedenen Randbedingungen abhängen können und das Finden der passenden Einstellung somit sehr komplex wird. Beispielsweise beeinflussen die Arbeitstiefe selbst und auch unterschiedliche Bodenbeschaffenheiten den resultierenden Querzug, sodass die nachlaufende Bodenwerkzeugreihe einmal um ein größere Maß und einmal um ein kleineres Maß tiefergestellt werden muss als die vorauslaufende Reihe.

Das Einjustieren der passenden Arbeitstiefen der Bodenwerkzeugreihen ist dabei bislang nicht nur komplex, sondern auch mühsam. Üblicherweise muss der Maschinenführer vom Schlepper steigen und die Werkzeugreihen über Stellspindeln und Ähnliches einjustieren, was dann jeweils wiederum von Neuem zu bewerkstelligen ist, wenn sich die Bodenverhältnisse ändern.

Herkömmliche Arbeitstiefenverstellungen können das genannte Problem bislang nur unzureichend adressieren, da sie zwar die Arbeitstiefe der Bodenwerkzeugreihen verändern, jedoch nicht ausreichend die Querkräfte kompensieren und damit einen Schrägzug des Geräts eliminieren können. Insbesondere kann eine mühsam gefundene Tiefeneinstellung verstellt werden, wenn die Werkzeugreihen im Vorgewende ausgehoben und anschließend wieder abgesenkt werden.

Die Schrift DE 102 36 827 A1 beschreibt eine Scheibenegge mit zwei Scheibenreihen, die um aufrechte Schwenkachsen durch Hydraulikzylinder verschwenkt werden können, so dass die Scheiben ihren Anstellwinkel zur Fahrtrichtung verändern. Basierend auf der Theorie, dass bei einem größeren Schnittwinkel die Scheiben tiefer in den Boden eindringen, soll über die Verstellung der Anstellwinkel eine gleichmäßige Arbeitstiefe erzielt werden.

Die Schrift DE 10 2016 217 593 A1 zeigt eine Scheibenegge mit zwei Werkzeugreihen, deren Arbeitstiefe jeweils durch einen Hydraulikzylinder verstellt werden kann. Ein Schlepperführer kann über eine Bedienerschnittstelle einer Steuervorrichtung die Hydraulikzylinder betätigen.

Weitere Bodenbearbeitungswerkzeuge mit verstellbaren Werkzeugreihen sind aus den Schriften US 2014/048295A1, US 8 235 130 B2, EP 29 11 495 A1 und CN 105009719 A bekannt.

Hiervon ausgehend liegt der vorliegenden Erfindung die Aufgabe zugrunde, ein verbessertes landwirtschaftliches Bodenbearbeitungsgerät der genannten Art zu schaffen, das Nachteile des Standes der Technik vermeidet und Letzteren in vorteilhafter Weise weiterbildet. Insbesondere soll mit einfachen Mitteln in komfortabler Weise ein Schrägzug des Bodenbearbeitungsgeräts auch bei wechselnden Bodenbeschaffenheiten vermieden werden können.

Erfindungsgemäß wird die genannte Aufgabe durch ein landwirtschaftliches Bodenbearbeitungsgerät gemäß Anspruch 1 gelöst. Bevorzugte Ausgestaltungen der Erfindung sind Gegenstand der abhängigen Ansprüche.

Es wird also nach einem Aspekt der Erfindung vorgeschlagen, die Arbeitstiefeneinstellung der Bodenwerkzeugreihen relativ zueinander online im Arbeitsbetrieb zu verändern, um hierdurch im Arbeitsbetrieb auf sich ändernde Bodenverhältnisse reagieren und sich ergebende Seitenkräfte der Bodenwerkzeuge gegeneinander kompensieren zu können. Erfindungsgemäß sind die Bodenwerkzeugreihen in der abgesenkten Arbeitsstellung in ihrer Höhenstellung relativ zueinander und damit das Verhältnis der Arbeitstiefen der Bodenwerkzeugreihen zueinander durch eine im Arbeitsbetrieb werkzeuglos betätigbare, mit einem fremdenergiebetätigten Aktor versehene Einstellvorrichtung einstellbar. Anders als herkömmliche Arbeitstiefenverstellungen kann die genannte Einstellvorrichtung nicht nur die absolute Arbeitstiefe beider Bodenwerkzeugreihen, sondern die Relativstellung der Bodenwerkzeugreihen zueinander und damit die Arbeitstiefendifferenz der beiden Bodenwerkzeugreihen zueinander verändern, beispielsweise die Arbeitstiefe der nachlaufenden Bodenwerkzeugreihe stärker verstellen als die Arbeitstiefe der vorderen Bodenwerkzeugreihe und/oder die Arbeitstiefen der Bodenwerkzeugreihen gegenläufig verstellen, um hierdurch die sich an den Bodenwerkzeugreihen ergebenden Seitenkräfte verändern und kompensieren zu können.

Vorteilhafterweise kann die genannte Verstellung der Arbeitstiefendifferenz zusätzlich zu einer Einstellung der absoluten Arbeitstiefe vorgesehen sein, wobei die genannte Einstellvorrichtung vorteilhafterweise dazu vorgesehen ist, die Höhenstellungen der Bodenwerkzeugreihen relativ zueinander online von einem Schlepper aus zu ermöglichen.

In einfacher Ausgestaltung der Erfindung kann die genannte Einstellvorrichtung manuell vom Schlepper- bzw. Maschinenführer betätigbar sein, um durch ein Spielen mit der Einstellvorrichtung und dem Verhältnis der Arbeitstiefen eine Kompensation des Querzugs zu ermöglichen. Oft spürt oder sieht der Maschinenführer einen Querzug des Bodenbearbeitungsgeräts, beispielsweise anhand eines leichten Radierens des Fahrwerks, sodass er durch manuelle Betätigung der Einstellvorrichtung vom Schlepper aus gegensteuern kann.

Gemäß der Erfindung erfolgt die Betätigung der Einstellvorrichtung dabei automatisiert. Eine Steuervorrichtung stellt automatisch ein Steuersignal bereit, mittels dessen die Einstellvorrichtung betätigt werden kann. Bei vollautomatischer Ausbildung das genannte Steuersignal auch direkt der Einstellvorrichtung bereitgestellt, sodass diese dann anhand des Steuersignals eine entsprechende Stellbewegung veranlasst.

Die genannte Steuervorrichtung arbeitet hierbei in Abhängigkeit eines schrägzugrelevanten Betriebsparameters und ist hierzu mit geeigneten Erfassungsmitteln verbunden, die einen solchen für den schrägzugrelevanten Betriebsparameter erfassen.

Dabei weisen die genannten Erfassungsmittel einen Winkelsensor auf, der einen Anstellwinkel des Maschinenrahmens des Bodenbearbeitungsgeräts gegenüber einer aufrechten, fahrtrichtungsparallelen Ebene und/oder gegenüber einem ziehenden Schlepper erfasst. Ist der Maschinenrahmen beispielsweise über eine Deichsel am Schlepper angehängt und/oder um eine aufrechte Achse schwenkbar an einem Anbaubock befestigt, kann der Schwenkwinkel der Deichsel bzw. der Schwenkwinkel gegenüber dem Anbaubock als Maß für den Schrägzug genommen werden.

Alternativ oder zusätzlich können die genannten Erfassungsmittel als schrägzugrelevanten Betriebsparameter auch die sich am Bodenbearbeitungsgerät einstellenden Querkräfte erfassen, die quer zur Fahrtrichtung wirken und einen Schrägzug bewirken. Beispielsweise kann ein Belastungssensor die Querkraft erfassen, die der Werkzeugtragrahmen auf den Maschinenrahmen ausübt, und/oder eine Querkraft erfassen, die die Bodenwerkzeugreihen jeweils auf den Werkzeugtragrahmen ausüben Als Querbelastung können hierbei quer zur Fahrtrichtung wirkende Kräfte oder sich dadurch bedingte Biegemomente beispielsweise auf die Werkzeugträger erfasst werden und als Maß für den sich einstellenden Schrägzug genommen werden.

Alternativ oder zusätzlich können die genannten Erfassungsmittel auch einen Geschwindigkeitssensor aufweisen, der am Anbaugerät selbst oder am Schlepper vorgesehen sein kann, um die Fahrgeschwindigkeit zu bestimmen. Die Steuervorrichtung kann das Steuersignal für die Ansteuerung der Einstellvorrichtung anhand des Geschwindigkeitssignals anpassen, beispielsweise dergestalt, dass bei höheren Fahrgeschwindigkeiten eine größere Arbeitstiefendifferenz und bei kleineren Fahrgeschwindigkeiten eine kleinere Arbeitstiefendifferenz an den Bodenwerkzeugreihen vorgesehen wird.

Alternativ oder zusätzlich zur Berücksichtigung der Fahrgeschwindigkeit kann die Steuervorrichtung auch die Arbeitstiefe der Bodenwerkzeuge selbst berücksichtigen, wobei die Erfassungsmittel mittels einer geeigneten Sensorik die absolute Arbeitstiefe zumindest einer der beiden Bodenwerkzeugreihen erfassen kann. Die Steuervorrichtung kann dann die Arbeitstiefendifferenz zwischen den Bodenwerkzeugreihen an die absolute Arbeitstiefe anpassen, beispielsweise dergestalt, dass bei einer größeren absoluten Arbeitstiefe eine größere Arbeitstiefendifferenz zwischen den beiden Bodenwerkzeugreihen vorgesehen wird, um auch an der nachlaufenden Bodenwerkzeugreihe eine vergleichbare Querzugbelastung wie an der vorauslaufenden Werkzeugreihe zu erhalten.

Alternativ oder zusätzlich zu einer Steuerung mit Regelkreis und Erfassung des sich tatsächlich einstellenden Schrägzugs bzw. eines entsprechenden schrägzugrelevanten Betriebsparameters kann die Steuervorrichtung auch als Vorsteuerung ausgebildet sein bzw. einen entsprechenden Vorsteuerungsbaustein besitzen. Insbesondere kann die Steuervorrichtung Auswahlmittel umfassen, mittels derer ein Maschinenführer relevante Betriebsparameter vorauswählen kann, anhand derer dann ein Voreinstellmittel das Stellsignal voreinstellt. Die genannten Auswahlmittel können dabei insbesondere zumindest einen Betriebsparameter aus der Gruppe Bodenbeschaffenheit, Bodenhärte, Bodenfeuchte oder Anstellwinkel der Bodenwerkzeuge auswählen, sodass der Maschinenführer beispielsweise lediglich die Größe "Boden hart" oder "Boden mittelhart" oder "Boden weich" auswählt und die Voreinstellmittel ein hierzu passendes Stellsignal bereitstellen, anhand derer dann die Einstellvorrichtung die relative Hoheneinstellung der Bodenwerkzeugreihen relativ zueinander halbautomatisch oder vollautomatisch einstellt.

Anstelle oder zusätzlich zu einer manuellen Betätigung der genannten Auswahlmittel durch den Maschinenführer kann auch eine automatisierte Ausbildung der Auswahlmittel vorgesehen sein, die in Abhängigkeit erfasster Sensordaten arbeiten können. Beispielsweise kann ein Bodensensor und/oder Bodenhärtesensor zum Erfassen der Bodenfeuchte und/oder der Bodenhärte vorgesehen sein, sodass dann anstelle der sensorisch erfassten Bodenbeschaffenheit eine Voreinstellung der relativen Höhenlage der Bodenwerkzeugreihen zueinander vorgenommen wird.

In vorteilhafter Weiterbildung der Erfindung wird die Höhenstellung der Bodenwerkzeugreihen relativ zueinander und damit die Arbeitstiefendifferenz zwischen den Bodenwerkzeugreihen über eine Neigungsverstellung des Werkzeugtragrahmens bewerkstelligt. Wird der Werkzeugtragrahmen um seine Tragrahmenschwenkachse verkippt, wird die weiter von der Tragrahmenachse beabstandete Bodenwerkzeugreihe stärker in der Höhe verstellt als eine näher bei der Schwenkachse liegende Werkzeugreihe. Vorteilhafterweise kann der genannte Werkzeugtragrahmen an einem vorderen Endabschnitt um die genannte Tragrahmenschwenkachse schwenkbar gelagert sein, wobei die Rahmenschwenkachse beispielsweise an einem heckseitigen Ende eines Hauptrahmens angeordnet und/oder an einem frontseitigen Ende des Werkzeugtragrahmens vorgesehen sein kann. Wird der Werkzeugtragrahmen in seiner liegenden Arbeitsposition ein wenig weiter nach unten verkippt, wird die hintere Werkzeugreihe stärker in den Boden gedrückt als die vordere Bodenwerkzeugreihe. Dementsprechend kann durch Verkippen des Werkzeugtragrahmens der Querzug der Bodenwerkzeugreihen einjustiert werden.

Vorteilhafterweise umfasst die vorgenannte Einstellvorrichtung einen Aktor zum Verkippen des Werkzeugtragrahmens und/oder zum Einstellen der Kippstellung des Werkzeugtragrahmens.

In vorteilhafter Weiterbildung der Erfindung kann der genannte Aktor einen Schwenkantrieb bilden, mittels dessen der genannte Werkzeugtragrahmen um seine Rahmenschwenkachse verkippt werden kann, wobei der genannte Schwenkantrieb vorteilhafterweise derart ausgebildet ist, dass verschiedene Kippstellungen fest eingestellt werden können. Vorteilhafterweise kann der Schwenkantrieb derart beschaffen sein, dass sich die anzufahrende, gewünschte Kippstellung des Werkzeugtragrahmens stufenlos variieren bzw. einstellen lässt.

Um eine kompakte, kleinbauende und einfach mit Energie zu versorgende Ausbildung zu erreichen, kann vorteilhafterweise der Aktor der Einstellvorrichtung in die Hubvorrichtung bzw. den Hubantrieb zum Ausheben des Werkzeugtragrahmens in die Vorgewende- und/oder Transportstellung integriert sein.

Die genannte Hubvorrichtung zum Ausheben des Werkzeugtragrahmens und der daran befestigten Bodenwerkzeugreihen in die Vorgewende- bzw. Transportstellung kann vorteilhafterweise einen Druckmittelzylinder beispielsweise in Form eines Hydraulikzylinders umfassen, der einerseits an dem auszuhebenden Werkzeugtragrahmen und andererseits an einem Hauptrahmen oder einem damit verbundenen hauptrahmenfesten Element gelenkig angelenkt sein kann, um den Werkzeugtragrahmen um dessen Rahmenschwenkachse zu verschwenken.

Besitzt der Hubantrieb eine solchen Druckmittelzylinder, kann der vorgenannte Aktor der Einstellvorrichtung in vorteilhafter Weiterbildung der Erfindung in den genannten Druckmittelzylinder integriert bzw. daran vorgesehen sein und einen verstellbaren Anschlag bilden, der eine Endlage des Druckmittelzylinders der Hubvorrichtung und damit die Kippstellung des Werkzeugtragrahmens vorgibt, wobei der genannte Anschlag verstellbar ist, um verschiedene Kippstellungen vorgeben zu können.

Der den Anschlag für den Hubzylinder bildende Aktor der Einstellvorrichtung kann dabei insbesondere in Form eines zweiten Kolbens ausgebildet sein, der schwimmend in dem Druckmittelzylinder der Hubvorrichtung angeordnet sein kann. Insbesondere kann der genannte zweite schwimmende Kolben als Ringkolben ausgebildet sein und auf der Kolbenstange des Druckmittelzylinders der Hubvorrichtung verschieblich sitzen, wobei die Beabstandung dieses schwimmenden Ringkolbens von dem Kragen des Zylinders, aus dem die Kolbenstange austritt, durch Befüllen bzw. Ablassen der Ringkammer zwischen schwimmendem Ringkolben und Zylinderkragen eingestellt werden kann. In der abgesenkten Arbeitsstellung wird der Hauptkolben der Druckmittelzylindereinheit der Hubvorrichtung gegen den genannten schwimmenden Kolben gefahren, wodurch die gewünschte Kippstellung und damit Arbeitstiefendifferenz eingestellt wird.

Soll der Werkzeugtragrahmen und die daran befestigten Bodenwerkzeugreihen im Vorgewende oder für den Transport ausgehoben werden, kann die zweite Ringkammer des Druckmittelzylinders zwischen dem schwimmenden Kolben und dem Hauptkolben mit Druckmittel befüllt werden, um die Kolbenstange einzufahren. Bei einem nachfolgenden Absenken des Werkzeugtragrahmens durch Ausfahren der Kolbenstange fährt der Hauptkolben wiederum gegen den schwimmenden Kolben, dessen zuvor eingestellte Position unverändert geblieben ist, sodass auch nach einem erneuten Absenken aus dem Vorgewende die zuvor einjustierte Arbeitstiefendifferenz die Kompensation der Querkräfte erhalten bleibt.

Alternativ zu einem solchen schwimmend gelagerten Ringkolben kann der Aktor der Einstellvorrichtung auch in Form eines zweiten Kolbens ausgebildet sein, der auf der Kolbenstange des Druckmittelzylinders der Hubvorrichtung des Druckmittelzylinders der Hubvorrichtung außerhalb dessen Zylinders fixiert ist und in einem zweiten, separaten Zylinder aufgenommen ist, welcher zweite separate Zylinder dann einen der beiden Anlenkpunkte bilden kann, beispielsweise gelenkig am Werkzeugtragrahmen oder gelenkig am Maschinenrahmen angelenkt sein kann. Durch diesen zweiten separaten Zylinder kann ebenfalls die effektive Länge der Druckmittelzylindereinheit in der Hubvorrichtung in der vollends ausgefahrenen Stellung variabel eingestellt und damit die gewünschte Neigung des Werkzeugtragrahmens einjustiert werden.

Die Erfindung wird nachfolgend anhand eines bevorzugten Ausführungsbeispiels und zugehöriger Zeichnungen näher erläutert. In den Zeichnungen zeigen:
- Fig. 1:: eine schematische, perspektivische Darstellung eines landwirtschaftichen Bodenbearbeitungsgeräts in einer Blickrichtung schräg von vorne nach einer Ausführung der Erfindung, bei dem ein sich in der abgesenkten Arbeitsstellung quer zur Fahrtrichtung erstreckender Werkzeugtragrahmen um eine liegende Querachse schwenkbar an einem Maschinenrahmen angelenkt ist, der durch ein Fahrwerk am Boden abgestützt ist,
- Fig. 2:: eine schematische, perspektivische Ansicht des Bodenbearbeitungsgeräts aus Fig. 1 in einer Blickrichtung schräg von hinten,
- Fig. 3:: eine schematische Seitenansicht des Bodenbearbeitungsgeräts aus Figuren 1 und 2, die die Verschwenkbarkeit des die beiden Bodenwerkzeugreihen tragenden Werkzeugtragrahmens illustriert und den als schwimmenden Ringkolben ausgebildeten Aktor der Einstellvorrichtung, der in den Hubzylinder integriert ist, zeigt, und
- Fig. 4:: eine schematische Seitenansicht des Bodenbearbeitungsgeräts ähnlich Fig. 3, wobei die Ansteuerung der Druckmittelzylindereinheit über ein signalgesteuertes Ventil erfolgt.

Wie die Figuren zeigen, kann das landwirtschaftliche Bodenbearbeitungsgerät 1 zwei Bodenwerkzeugreihen 2 und 3 aufweisen, die sich jeweils quer zur Fahrtrichtung 4 erstrecken und in Fahrtrichtung hintereinander herlaufen. Die genannten Werkzeugreihen 2 und 3 können dabei jeweils eine Vielzahl von nebeneinander angeordneten Bodenwerkzeugen 5 umfassen, die jeweils über einen Tragarm 6 an einem Werkzeugtragrahmen 7 befestigt bzw. aufgehängt sein können. Die genannten Bodenwerkzeuge 5 können grundsätzlich verschieden ausgebildet sein, beispielsweise in Form von Scharscheiben, wobei die Bodenwerkzeuge 5 zur Fahrtrichtung 4 leicht schräg angestellt sein können. Vorteilhafterweise sind dabei die Bodenwerkzeuge 5 der vorauslaufenden Werkzeugreihe 2 gegenläufig zu den Bodenwerkzeugen 5 der hinterherlaufenden Werkzeugreihe 3 angestellt, beispielsweise dergestalt dass die Bodenwerkzeuge 5 der vorauslaufenden Werkzeugreihe 2 leicht nach links und die Bodenwerkzeuge 5 der hinterherlaufenden Werkzeugreihe 3 leicht nach rechts verkippt sind.

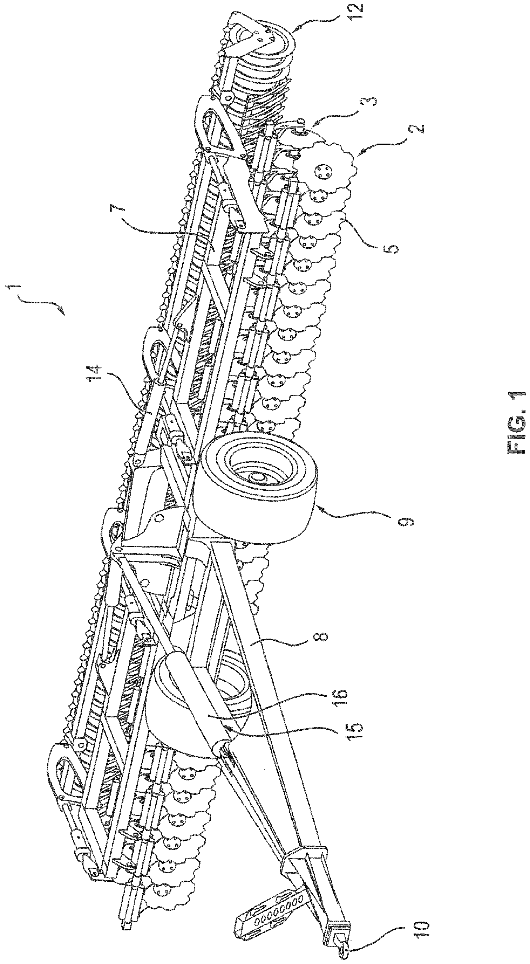

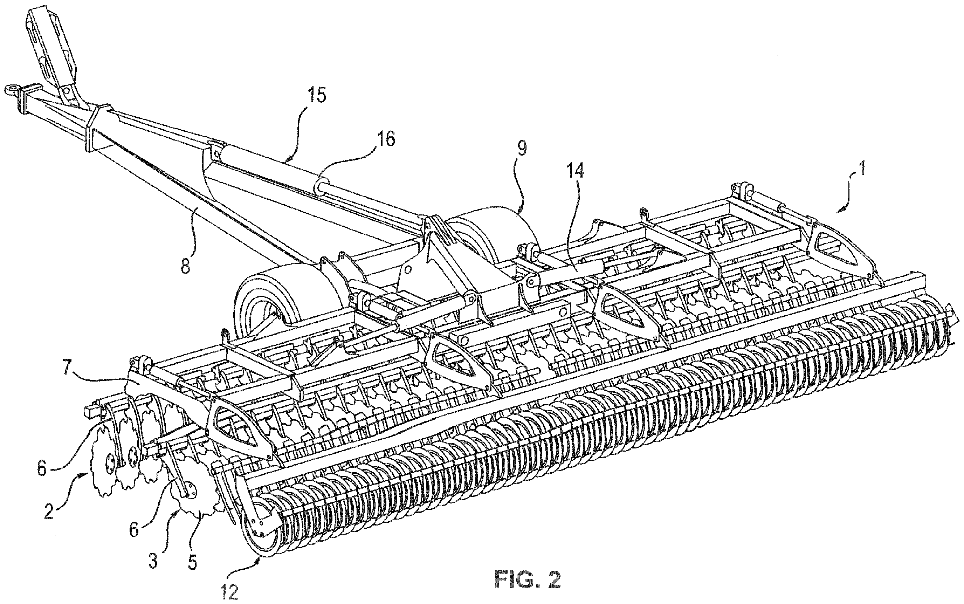

Der genannte Werkzeugtragrahmen 7 kann sich in der abgesenkten Arbeitsstellung, die die Figuren 1 und 2 zeigen, mit seiner Längsachse quer zur Fahrtrichtung 4 erstrecken und an einem Maschinenrahmen 8 befestigt sein, der über ein Fahrwerk 9 am Boden abgestützt und über eine Anbauvorrichtung 10 an einem Schlepper anbaubar sein kann. Die Anbauvorrichtung 10 kann dabei eine Deichsel oder auch einen Anbaubock mit einer Dreipunktanlenkung umfassen.

Der Werkzeugtragrahmen 7 kann an dem genannten Maschinenrahmen 8 um eine liegende, sich quer zur Fahrtrichtung 4 erstreckende Rahmenschwenkachse 11 schwenkbar angelenkt sein, sodass der Werkzeugtragrahmen 7 aus einer liegenden Arbeitsstellung, wie sie die Figuren 1 und 2 zeigen, in eine aufrechte Transportstellung ausgehoben werden kann.

Um die zulässige Straßenbreite einhalten zu können, kann der genannte Werkzeugtragrahmen 7 in verschiedene Rahmensegmente unterteilt sein, die zueinander verklappbar sein können. Beispielsweise können seitliche Rahmensegmente 7l und 7r in der aufrechten Transportstellung des Werkzeugtragrahmens 7 nach vorne scharnieren, um näherungsweise an den Maschinenrahmen 8 angeklappt zu werden. Hierzu können die Rahmensegmente miteinander gelenkig verbunden und über Klappzylinder 14 verklappt werden, wie dies an sich bekannt ist.

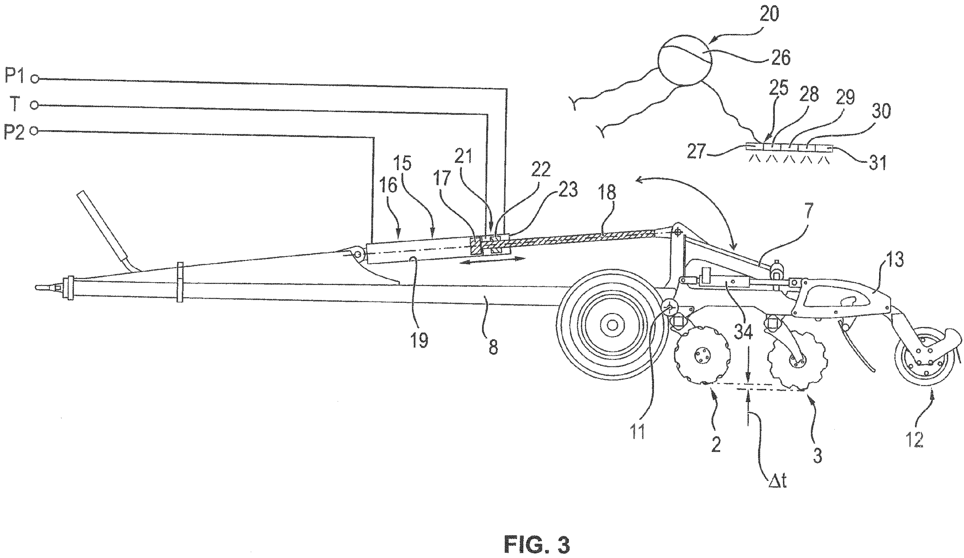

Wie die Figuren 1 und 2 zeigen, kann an dem Werkzeugtragrahmen 7 zusätzlich zu den beiden Werkzeugreihen 2 und 3 eine weitere Bodenwerkzeugreihe 12 beispielsweise in Form der in den Figuren gezeigten Rillenwalze befestigt bzw. aufgehängt sein, wobei die Nachläufereinheit bzw. nachlaufende Bodenwerkzeugreihe 12 vorteilhafterweise gegenüber dem Werkzeugtragrahmen 7 und damit den beiden Werkzeugreihen 2 und 3 höhenverstellbar sein kann, insbesondere dadurch, dass ein Nachläuferrahmen 13 relativ zum Werkzeugtragrahmen 7 um eine liegende, quer zur Fahrtrichtung ausgerichtete Achse verschwenkbar ist, vgl. Fig. 3. Ein Vorspann- und/oder Einstellmittel 34 beispielsweise in Form eines Druckmittelzylinders kann dabei die Höhenstellung der nachlaufenden Bodenwerkzeugreihe 12 beeinflussen, vgl. Fig. 3. Die nachlaufende Bodenwerkzeugreihe 12 kann auch andere Bodenwerkzeuge beispielsweise in Form von Zustreichern umfassen, vgl. Fig. 3.

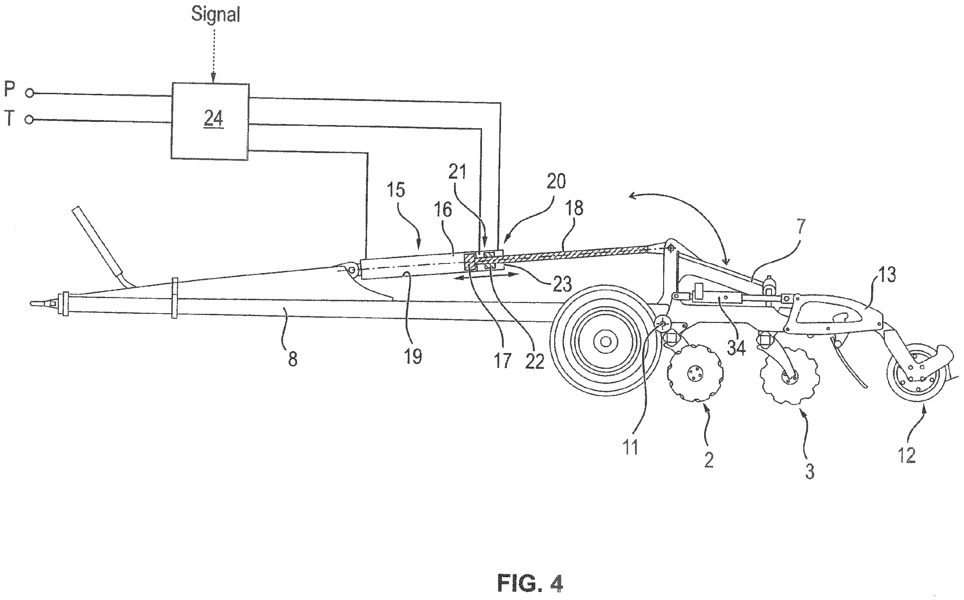

Um den Werkzeugtragrahmen 7 mit den daran aufgehängten Bodenwerkzeugreihen 2, 3 und 4 aus der in den Figuren gezeigten, abgesenkten Arbeitsstellung in eine Vorgewende- bzw. Transportstellung ausheben zu können, kann eine fremdenergiebetätigbare Hubvorrichtung 15 vorgesehen sein, die einen Druckmittelzylinder 16 aufweisen kann, die einerseits gelenkig am Werkzeugtragrahmen 7 und andererseits gelenkig am Maschinenrahmen 8 angelenkt sein kann, vgl. Fig. 3 und Fig. 4.

Der genannte Druckmittelzylinder 16 kann dabei einen Hauptkolben 17 aufweisen, der an einer Kolbenstange 18 starr befestigt und in einem Zylinder 19 verschieblich geführt ist.

Je nach Einbausituation des Druckmittelzylinders 16 ist dieser in der abgesenkten Arbeitsstellung des Werkzeugtragrahmens 7 ausgefahren oder eingefahren, wobei die Figuren 3 und 4 eine Einbausituation zeigen, bei der der Druckmittelzylinder 16 als Hubzylinder arbeitet und in der abgesenkten Arbeitsstellung des Werkzeugtragrahmens 7 ausgefahren ist. Damit bestimmt die ausgefahrene Endstellung des Druckmittelzylinders 16 die Kipp- bzw. Schwenkstellung des Werkzeugtragrahmens 7 in der abgesenkten Arbeitsstellung.

Um nun die exakte Neigung des Werkzeugtragrahmens 7 in der abgesenkten Arbeitsstellung einjustieren zu können, ist eine Einstellvorrichtung 20 vorgesehen, mittels derer die - je nach Einbausituation vollständig ausgefahrene oder eingefahrene - Endstellung des Druckmittelzylinders 16 variabel eingestellt werden kann. Genauer gesagt kann mittels der Einstellvorrichtung 20 eingestellt werden, wie weit die Kolbenstange 18 vollständig ausgefahren (oder eben je nach Einbausituation eingefahren) werden kann.

Insbesondere kann die genannte Einstellvorrichtung 20 hierzu einen Aktor 21 umfassen, der einen verstellbaren Anschlag für den Hauptkolben 17 bildet, wobei der genannte Aktor 21 insbesondere in Form eines schwimmenden Kolbens ausgebildet sein kann. Bestimmt die vollständig ausgefahrene Lage des Druckmittelzylinders 16 die Neigung des Werkzeugtragrahmens 7 in der Arbeitsstellung, kann der genannte schwimmende Kolben als Ringkolben ausgebildet sein, der verschieblich auf der Kolbenstange 18 sitzt und zwischen dem Hauptkolben 17 und dem Zylinderkragen, an dem die Kolbenstange 18 aus dem Zylinder 19 austritt, angeordnet sein kann.

Wird in die Ringkammer zwischen dem schwimmenden Kolben 22 und dem Zylinderkragen 23 Druckmittel gefüllt, kann der schwimmende Kolben 22 nicht direkt bis an den Zylinderkragen 23 fahren, sondern er hält eine gewissen Abstand hierzu. Dementsprechend kann auch die Kolbenstange 18 mit dem Hauptkolben 17 nicht mehr vollständig ausfahren, d.h. durch Einjustieren der Lage des schwimmenden Kolbens 22 von dem Zylinderkragen 23 kann die Endlage des Hauptkolbens 17 und damit die vollständig ausgefahren Länge der Kolbenstange 18 einjustiert werden.

Zum Einfahren der Kolbenstange 18 kann Druckmittel in die zweite Ringkammer zwischen dem schwimmenden Kolben 22 und dem Hauptkolben 17 gefüllt werden, um den Werkzeugtragrahmen 7 auszuheben.

Umgekehrt kann auch die Ringkammer zwischen dem schwimmenden Kolben 22 und dem Hauptkolben 17 zum Einjustieren der Endlage befüllt werden, wobei dann die andere Ringkammer zwischen dem schwimmenden Kolben 22 und dem Zylinderkragen 23 mit Druckmittel befüllt wird, um die Kolbenstange 18 einzufahren und den Werkzeugtragrahmen 7 auszuheben.

Bei einer umgekehrten Einbausituation des Druckmittelzylinders 16, bei der der Druckmittelzylinder 16 zum Ausheben des Werkzeugtragrahmens 7 nicht zieht, sondern drückt und in der abgesenkten Arbeitsstellung des Werkzeugtragrahmens 7 eingefahren wäre, kann der genannte schwimmende Kolben 22 nicht auf der Ringseite schwimmend auf der Kolbenstange 18, sondern auf der anderen Seite des Hauptkolbens 17 in der größeren Zylinderkammer sitzen. Die Einstellung der Endlage kann dabei dann in analoger Weise erfolgen.

Wie Fig. 4 zeigt, kann das System auch mit nur einem Druckanschluss und einem Rücklaufanschluss arbeiten, wobei dann ein Drucksteuerventil 24 den vom Druckanschluss P herkommenden Druck auf die jeweiligen Zylinderkammern des Druckmittelzylinders 16 verteilen und steuern kann, um den Druckmittelzylinder 16 in entsprechender Weise ein- und ausfahren zu können und den schwimmenden Kolben 22 in die gewünschte Lage fahren zu können.

Der Druckmittelzylinder 16 kann hierbei grundsätzlich einfachwirkend ausgebildet sein und bei der in den Figuren 3 und 4 gezeigten Einbausituation beispielsweise nur fremdenergiebetätigt einfahrbar sein. Vorteilhafterweise jedoch kann der genannte Druckmittelzylinder 16 doppelt wirkend ausgebildet sein, sodass die Kolbenstange 18 druckmittelbetätigt sowohl eingefahren als auch ausgefahren werden kann. Hierdurch kann der Werkzeugtragrahmen 7 sowohl nach oben ausgehoben als auch nach unten gefahren werden, um die Bodenwerkzeugreihen 2 und 3 aktiv auf den Boden zu drücken.

Wie aus den Figuren 3 und 4 ersichtlich ist, bestimmt die Neigung des in der Arbeitsstellung näherungsweise liegend ausgerichteten Werkzeugtragrahmens 7 die Arbeitstiefendifferenz der beiden Werkzeugreihen 2 und 3. Da die vorauslaufende Werkzeugreihe 2 näher an der Rahmenschwenkachse 11 angeordnet ist als die nachlaufende Werkzeugreihe 3, haben Neige- bzw. Kippbewegungen des Werkzeugtragrahmens 7 an der vorauslaufenden Werkzeugreihe 2 eine kleinere Höhenstellbewegung zur Folge als an der hinteren Werkzeugreihe 3. Wird also die Neigung des Werkzeugtrahmens 7 in der abgesenkten Arbeitsstellung leicht justiert, wird die Arbeitstiefendifferenz der beiden Werkzeugreihen 2 und 3 variiert und einjustiert, sodass in der eingangs erläuterten Weise die sich einstellenden Querbelastungen an den Werkzeugreihen 2 und 3 variiert und damit gegeneinander kompensiert werden können.

## Patentansprüche

1. Landwirtschaftliches Bodenbearbeitungsgerät mit zumindest zwei Reihen (2,3) von Bodenwerkzeugen (5), die an einem Werkzeugtragrahmen (7) befestigt sind, der um eine liegende Rahmenschwenkachse (11) schwenkbar an einem durch ein Fahrwerk (9) am Boden abgestützten Maschinenrahmen (8) gelagert und durch eine Hubvorrichtung (15) aushebbar ist, wobei die Bodenwerkzeugreihen (2,3) in der abgesenkten Arbeitsstellung in ihrer Höhenstellung relativ zueinander und damit eine Arbeitstiefendifferenz (_{Δ}t) zwischen den Bodenwerkzeugreihen (2,3) durch eine im Arbeitsbetrieb werkzeuglos betätigbare, einen fremdenergiebetätigbaren Aktor (21) aufweisende Einstellvorrichtung (20) einstellbar sind, **dadurch gekennzeichnet, dass** Erfassungsmittel (25) zum Erfassen eines schrägzugrelevanten Betriebsparameters, der einen resultierenden Schrägzug der Bodenwerkzeuge (5) quer zur Fahrtrichtung (4) charakterisiert, vorgesehen sind und eine Steuervorrichtung (26) zum automatischen Betätigen der Einstellvorrichtung (20) die Arbeitstiefendifferenz (_{Δ}t) in Abhängigkeit des erfassten schrägzugrelevanten Betriebsparameters automatisch derart variiert, dass die sich an den Bodenwerkzeugreihen (2, 3) ergebenden Seitenkräfte sich gegeneinander kompensieren.

2. Landwirtschaftliches Bodenbearbeitungsgerät nach dem vorhergehenden Anspruch, wobei die Erfassungsmittel (25) einen Winkelsensor (27) zum Erfassen eines Winkels des Maschinenrahmens (8) zur Fahrtrichtung (4) und/oder zu einem Schlepper, an der das landwirtschaftliche Bodenbearbeitungsgerät angebaut ist, umfassen und die Steuervorrichtung dazu ausgebildet ist, das Steuersignal in Abhängigkeit des erfassten Winkels bereitzustellen.

3. Landwirtschaftliches Bodenbearbeitungsgerät nach einem der beiden vorhergehenden Ansprüche, wobei die Erfassungsmittel (25) einen Querbelastungssensor (28) zum Erfassen eines Querzugs des Werkzeugtragrahmens (7) auf den Maschinenrahmen (8) quer zur Fahrtrichtung (4) und/oder zum Erfassen eines Querzugs der Werkzeugreihen (2,3) auf den Werkzeugtragrahmen (7) quer zur Fahrtrichtung umfassen und die Steuervorrichtung (26) dazu ausgebildet ist, das Steuersignal in Abhängigkeit der erfassten Querbelastung bereitzustellen.

4. Landwirtschaftliches Bodenbearbeitungsgerät nach dem vorhergehenden Anspruch, wobei die Erfassungsmittel (25) einen Geschwindigkeitssensor (29) zum Erfassen der Fahrgeschwindigkeit umfassen und die Steuervorrichtung (26) dazu ausgebildet ist, das Steuersignal in Abhängigkeit der erfassten Fahrgeschwindigkeit bereitzustellen.

5. Landwirtschaftliches Bodenbearbeitungsgerät nach einem der vorhergehenden Ansprüche, wobei die Erfassungsmittel (25) einen Arbeitstiefensensor (30) zum Erfassen der Arbeitstiefe der Bodenwerkzeuge (5) einer der Werkzeugreihen (2,3) umfassen und die Steuervorrichtung (26) dazu ausgebildet ist, das Steuersignal in Abhängigkeit der erfassten Arbeitstiefe bereitzustellen und/oder zu variieren.

6. Landwirtschaftliches Bodenbearbeitungsgerät nach einem der vorhergehenden Ansprüche, wobei die Erfassungsmittel (25) einen Bodenbeschaffenheitssensor (31) zum Erfassen einer Bodenbeschaffenheit, insbesondere Bodenhärte und/oder -feuchte, umfassen und die Steuervorrichtung (26) dazu ausgebildet ist, das Steuersignal in Abhängikeit der erfassten Bodenbeschaffenheit bereitzustellen und/oder zu variieren.

7. Landwirtschaftliches Bodenbearbeitungsgerät nach einem der vorhergehenden Ansprüche, wobei die Steuervorrichtung (26) zum Bereitstellen eines Steuersignals zum Betätigen der Einstellvorrichtung (20) Auswahlmittel zum Auswählen zumindest eines schrägzugrelevanten Betriebsparameters aus der Gruppe Bodenhärte, Bodenbeschaffenheit, Bodenfeuchte, Werkzeuganstellwinkel und gewünschte Arbeitstiefe, sowie Voreinstellmittel zum Voreinstellen des Steuersignals in Abhängigkeit des ausgewählten schrägzugrelevanten Betriebsparameters umfasst.

8. Landwirtschaftliches Bodenbearbeitungsgerät nach einem der vorhergehenden Ansprüche, wobei der fremdenergiebetätigbare Aktor (21) der Einstellvorrichtung (20) einen verstellbaren Endanschlag bildet, der eine Endstellung der Hubvorrichtung (15) und/oder eine Neigungsstellung des Werkzeugtragrahmens (7) in der abgesenkten Arbeitsposition definiert.

9. Landwirtschaftliches Bodenbearbeitungsgerät nach dem vorhergehenden Anspruch, wobei der Aktor (21) in die Hubvorrichtung (15) zum Ausheben des Werkzeugtragrahmens (7) in eine Vorgewende- und/oder Transportstellung integriert ist.

10. Landwirtschaftliches Bodenbearbeitungsgerät nach dem vorhergehenden Anspruch, wobei der Aktor (21) der Einstellvorrichtung (20) einen schwimmenden Kolben (22) bildet, der in einem Druckmittelzylinder (16) der Hubvorrichtung (15) verschieblich aufgenommen ist.

11. Landwirtschaftliches Bodenbearbeitungsgerät nach dem vorhergehenden Anspruch, wobei der schwimmende Kolben (22) als Ringkolben ausgebildet ist und verschieblich auf einer Kolbenstange (18) des Druckmittelzylinders (16) zwischen deren Hauptkolben (17) und einem Zylinderkragen (23) sitzt, aus dem die Kolbenstange (18) aus dem Zylinder (19) austritt.

12. Landwirtschaftliches Bodenbearbeitungsgerät nach einem der beiden vorhergehenden Ansprüche, wobei die Einstellvorrichtung (20) ein Drucksteuermittel, insbesondere in Form eines Drucksteuerventils (24), zur Steuerung der Befüllung des Druckmittelzylinders (16) zum Bestimmen der Position des schwimmenden Kolbens (22) aufweist.

## Claims

1. Agricultural soil cultivation unit having at least two rows (2, 3) of soil working tools (5) that are fastened to a tool carrier frame (7) that is pivotably supported about a horizontal frame pivot axis (11) at a machine frame (8) supported by a chassis (9) on the ground and is liftable by a lifting apparatus (15), wherein the vertical positions of the soil working tool rows (2, 3) are adjustable relative to one another in the lowered working position and a working depth difference (_{Δ}t) between the soil working tool rows (2, 3) is thus adjustable by a setting apparatus (20) actuable without tools in working operation and having an actuator (21) actuable by external energy, **characterized in that** detection means (25) are provided for detecting an operating parameter that is relevant to a diagonal pull and that characterizes a resulting diagonal pull of the soil working tools (5) transversely to the direction of travel (4) and a control apparatus (26) for automatically actuating the setting apparatus (20) varies the working depth difference (_{Δ}t) in dependence on the detected operating parameter relevant to the diagonal pull in such a way that that the lateral forces resulting on the soil working tool rows (2, 3) compensate one another.

2. Agricultural soil cultivation unit in accordance with the preceding claim, wherein the detection means (25) comprise an angle sensor (27) for detecting an angle of the machine frame (8) relative to the direction of travel (4) and/or relative to a tractor to which the agricultural soil cultivation unit is attached, and the control apparatus is configured to provide the control signal in dependence on the detected angle.

3. Agricultural soil cultivation unit in accordance with one of the two preceding claims, wherein the detection means (25) comprise a transverse load sensor (28) for detecting a transverse pull of the tool carrier frame (7) on the machine frame (8) transversely to the direction of travel (4) and/or for detecting a transverse pull of the tool rows (2, 3) on the tool carrier frame (7) transversely to the direction of travel; and the control apparatus (26) is configured to provide the control signal in dependence on the detected transverse load.

4. Agricultural soil cultivation unit in accordance with the preceding claim, wherein the detection means (25) comprise a speed sensor (29) for detecting the travel speed, and the control apparatus (26) is configured to provide the control signal in dependence on the detected travel speed.

5. Agricultural soil cultivation unit in accordance with one of the prceding claims, wherein the detection means (25) comprise a working depth sensor (30) for detecting the working depth of the soil working tools (5) of one of the tool rows (2, 3), and the control apparatus (26) is configured to provide and/or to vary the control signal in dependence on the detected working depth.

6. Agricultural soil cultivation unit in accordance with one of the prceding claims, wherein the detection means (25) comprise a soil quality sensor (31) for detecting a soil quality, in particular a soil hardness or soil moisture; and the control apparatus (26) is configured to provide and/or to vary the control signal in dependence on the detected soil quality.

7. Agricultural soil cultivation unit in accordance with one of the preceding claims, wherein the control apparatus (26) for providing a control signal for actuating the setting apparatus (20) comprises selection means for selecting at least one operating parameter relevant to the diagonal pull from the group soil hardness, soil quality, soil moisture, tool engagement angle, and desired working depth, as well as presetting means for presetting the control signal in dependence on the selected operating parameter relevant to the diagonal pull.

8. Agricultural soil cultivation unit in accordance with one of the preceding claims, wherein the actuator (21) of the setting apparatus (20) actuable by external energy forms an adjustable end abutment that defines an end position of the lifting apparatus (15) and/or an inclination position of the tool carrier frame (7) in the lowered working position.

9. Agricultural soil cultivation unit in accordance with the preceding claim, wherein the actuator (21) is integrated in the lifting apparatus (15) for lifting the tool carrier frame (7) into a headland position and/or into a transport position.

10. Agricultural soil cultivation unit in accordance with the preceding claim, wherein the actuator (21) of the setting apparatus (20) forms a floating piston (22) that is displaceably received in a pressure medium cylinder (16) of the lifting apparatus (15).

11. Agricultural soil cultivation unit in accordance with the preceding claim, wherein the floating piston (22) is configured as a ring piston and is displaceably seated on a piston rod (18) of the pressure medium cylinder (16) between its main piston (17) and a cylinder collar (23) from which the piston rod (18) emerges from the cylinder (19).

12. Agricultural soil cultivation unit in accordance with one of the two preceding claims, wherein the setting apparatus (20) has a pressure control means, in particular in the form of a pressure control valve (24), for controlling the filling of the pressure medium cylinder (16) for determining the position of the floating piston (22).

## Revendications

1. Appareil agricole de travail du sol avec au moins deux rangées (2, 3) d'outils de travail du sol (5), qui sont fixés sur un châssis de support d'outils (7), qui est monté sur un châssis de machine (8) prenant appui sur le sol par un train de roulement (9) de manière à pouvoir pivoter autour d'un axe de pivotement de châssis (11) horizontal et qui peut être soulevé par un dispositif de levage (15), dans lequel les rangées d'outils de travail du sol (2, 3), dans la position de travail abaissée dans leur position en hauteur les uns par rapport aux autres, et ainsi une différence de profondeur de travail (_{Δ}t) entre les rangées d'outils de travail au sol (2, 3) peuvent être réglées par un dispositif de réglage (20) présentant un actionneur (21) pouvant être actionné par une énergie extérieure, pouvant être actionné sans outil dans le mode de travail, **caractérisé en ce que** sont prévus des moyens de détection (25) pour détecter un paramètre de fonctionnement important pour la traction oblique, qui caractérise une traction oblique en résultant des outils de travail du sol (5) de manière transversale par rapport au sens de déplacement (4), et un dispositif de commande (26) pour actionner de manière automatique le dispositif de réglage (20) fait varier automatiquement la différence de profondeur de travail (_{Δ}t) en fonction du paramètre de fonctionnement important en matière de traction oblique détecté de telle manière que les forces latérales découlant sur les rangées d'outils de travail du sol (2, 3) se compensent mutuellement.

2. Appareil agricole de travail du sol selon la revendication précédente, dans lequel les moyens de détection (25) comprennent un capteur d'angle (27) pour détecter un angle du châssis de machine (8) par rapport au sens de déplacement (4) et/ou par rapport à un tracteur, sur lequel l'appareil agricole de travail du sol est installé, et le dispositif de commande est réalisé pour fournir le signal de commande en fonction de l'angle détecté.

3. Appareil agricole de travail du sol selon l'une quelconque des revendications précédentes, dans lequel les moyens de détection (25) comprennent un capteur de contrainte transversale (28) pour détecter une traction transversale du châssis de support d'outils (7) sur le châssis de machine (8) de manière transversale par rapport au sens de déplacement (4) et/ou pour détecter une traction transversale des rangées d'outils (2, 3) sur le châssis de support d'outils (7) de manière transversale par rapport au sens de déplacement et le dispositif de commande (26) est réalisé pour fournir le signal de commande en fonction de la contrainte transversale détectée.

4. Appareil agricole de travail du sol selon la revendication précédente, dans lequel les moyens de détection (25) comprennent un capteur de vitesse (29) pour détecter la vitesse de déplacement et le dispositif de commande (26) est réalisé pour fournir le signal de commande en fonction de la vitesse de déplacement détectée.

5. Appareil agricole de travail du sol selon l'une quelconque des revendications précédentes, dans lequel les moyens de détection (25) comprennent un capteur de profondeur de travail (30) pour détecter la profondeur de travail des outils de travail du sol (5) d'une des rangées d'outils (2, 3) et le dispositif de commande (26) est réalisé pour fournir et/ou faire varier le signal de commande en fonction de la profondeur de travail détectée.

6. Appareil agricole de travail du sol selon l'une quelconque des revendications précédentes, dans lequel les moyens de détection (25) comprennent un capteur de nature du sol (31) pour détecter une nature de sol, en particulier la dureté et/ou l'humidité du sol, et le dispositif de commande (26) est réalisé pour fournir et/ou faire varier le signal de commande en fonction de la nature du sol détectée.

7. Appareil agricole de travail du sol selon l'une quelconque des revendications précédentes, dans lequel le dispositif de commande (26) comprend pour fournir un signal de commande pour actionner le dispositif de réglage (20) des moyens de sélection pour sélectionner au moins un paramètre de fonctionnement important en matière de traction oblique parmi le groupe dureté du sol, nature du sol, humidité du sol, angle de placement de l'outil et profondeur de travail souhaitée, ainsi que des moyens de préréglage pour prérégler le signal de commande en fonction du paramètre de fonctionnement important en matière de traction oblique sélectionné.

8. Appareil agricole de travail du sol selon l'une quelconque des revendications précédentes, dans lequel l'actionneur (21) pouvant être actionné par une énergie extérieure du dispositif de réglage (20) forme une butée finale ajustable, qui définit une position finale du dispositif de levage (15) et/ou une position d'inclinaison du châssis de support d'outils (7) dans la position de travail abaissée.

9. Appareil agricole de travail du sol selon la revendication précédente, dans lequel l'actionneur (21) est intégré dans le dispositif de levage (15) pour soulever le châssis de support d'outils (7) dans une position en bordure de champ et/ou de transport.

10. Appareil agricole de travail du sol selon la revendication précédente, dans lequel l'actionneur (21) du dispositif de réglage (20) forme un piston (22) flottant, qui est logé de manière à pouvoir coulisser dans un cylindre à fluide sous pression (16) du dispositif de levage (15).

11. Appareil agricole de travail du sol selon la revendication précédente, dans lequel le piston (22) flottant est réalisé en tant que piston annulaire et siège de manière à pouvoir coulisser sur une tige de piston (18) du cylindre à fluide sous pression (16) entre son piston principal (17) et un rebord de cylindre (23), depuis lequel la tige de piston (18) sort du cylindre (19).

12. Appareil agricole de travail du sol selon l'une quelconque des deux revendications précédentes, dans lequel le dispositif de réglage (20) présente un moyen de commande sous pression, en particulier sous la forme d'une soupape de commande sous pression (24), pour commander le remplissage du cylindre à fluide sous pression (16) pour définir la position du piston (22) flottant.
